# EUROPÄISCHE PATENTANMELDUNG

(11) **EP 4 057 636 A1**
(43) Veröffentlichungstag der Anmeldung: **14.09.2022**
(21) Anmeldenummer: 22155514.7
(22) Anmeldetag: 08.02.2022
(51) Int. Cl.: H04Q 9/00

(54) **SYSTEM UND VERFAHREN ZUM BEREITSTELLEN EINES WERTES EINES PARAMETERS ÜBER EINE DATENTECHNISCHE VERBINDUNG**

(30) Priorität: 08.03.2021 DE 102021105483
(71) Anmelder: Turck Holding GmbH, 58553 Halver (DE)
(72) Erfinder: Strunkmann, Peter, 32760 Detmold (DE); Benninghoff, Dirk, 32825 Blomberg (DE)
(74) Vertreter: DTS Patent- und Rechtsanwälte Schnekenbühl und Partner mbB

(57) **Zusammenfassung**

Die Erfindung betrifft ein System (10) zum Bereitstellen eines Parameterwertes über eine datentechnische Verbindung; umfassend ein erstes Gerät (16), das dazu eingerichtet ist, den Parameterwert in einer ersten Repräsentation auszugeben; sowie eine Kommunikationseinheit (14), die dazu eingerichtet ist, den Parameterwert in der ersten Repräsentation zu empfangen, anhand des Parameterwertes in der ersten Repräsentation den Parameterwert in einer zweiten Repräsentation zu bestimmen und den Parameterwert in der zweiten Repräsentation an ein zweites Gerät (12) zu übertragen. Die Erfindung betrifft ferner eine Kommunikationseinheit für das System sowie ein Verfahren zum Bereitstellen eines Wertes eines Parameterwertes über eine datentechnische Verbindung.

## Beschreibung

Die Erfindung betrifft ein System zum Bereitstellen eines Wertes eines Parameters über eine datentechnische Verbindung, eine Kommunikationseinheit für ein solches System sowie ein Verfahren zum Bereitstellen eines Wertes eines Parameters über eine datentechnische Verbindung.

In vielfältigen Anwendungsgebieten, etwa für den Betrieb von Kraftfahrzeugen oder bei der Automatisierung von Fertigungsprozessen, werden vielfältige Einheiten wie Sensoren, Aktuatoren und Steuerungselemente in Netzwerken oder anderweitigen datentechnisch verbundenen Systemen zusammengefasst. Zur Überwachung von Prozessen müssen die Werte verschiedener Parameter erfasst werden, oft in Echtzeit und mit hoher Zuverlässigkeit.

Es ist etwa bekannt, Sensoren und/oder Aktuatoren in datentechnisch verbundene Systeme oder Netzwerke einzubinden, etwa in ein IO-Link-System. Typischerweise senden dabei IO-Link-Sensoren ihren Messwert über einen IO-Link-Master und einen Feldbus oder ein Ethernetprotokoll an eine speicherprogrammierbare Schaltung (SPS; englisch *"programmable logic circuit",* PLC). Dort wird der Messwert gelesen und in die tatsächliche Messwertgröße in einer geeigneten Einheit umgerechnet.

Typischerweise wird der Messwert des Sensors dabei als Ganzzahl, das heißt als IntegerWert bereitgestellt, wobei häufig 16-bit Integerwerte verwendet werden. Diese Ganzzahl wird von der speicherprogrammierbaren Schaltung gelesen und in einen Wert des gemessenen Parameters in einem Gleitkommaformat umgewandelt, zum Beispiel als Float-Wert, oder als normierter Ganzzahlwert, welcher insbesondere den betreffenden Wert über verschiedene Messstellen einheitlich darstellt. Die hierzu erforderlichen Parameter werden etwa bei der Programmierung bereitgestellt. Diese Parameter umfassen insbesondere bei einem linearen Zusammenhang bei der Umrechnung einen Gradienten und einen Offset-Wert. Zum Ermitteln der Parameter für den Gradienten und Offset kann beispielsweise auf ein Handbuch oder eine Beschreibungsdatei des Sensors zugegriffen werden. Zur Umrechnung wird dabei ein eigener Funktionsbaustein der speicherprogrammierbaren Schaltung verwendet.

Umgekehrt werden Parameter, um einen Aktuator anzusteuern, typischerweise ebenfalls als Ganzzahl bereitgestellt, etwa als 16-bit Integerwerte oder in einem anderen vorgegebenen Datentyp. Bei der Ansteuerung wird daher häufig ein zu übergebender Wert in einen Ganzzahlwert umgerechnet und über das System an den Aktuator übertragen. In diesem Fall kann der Parameter beispielsweise ursprünglich in einem Gleitkommaformat vorliegen, etwa als Float-Wert, oder in einem Ganzzahlenformat als normierter Ganzzahlwert wie oben erläutert. Zur Ansteuerung des Aktuators wird der Parameter dann als Ganzzahl bereitgestellt, etwa als 16-bit Integerwert.

Ferner ist es bekannt, Geräte mit einem Profil gemäß einem Standard zu betreiben, etwa IO-Link Smart Sensor Profile ED2. Es sind etwa Profile zum Betreiben von Sensoren und Aktuatoren bekannt. In diesem Fall kann bei der Programmierung der speicherprogrammierbaren Schaltung ein vorgegebener Funktionsbaustein für die Umrechnung zwischen Integer- und Gleitkommawert verwendet werden, der allerdings vor seinem Einsatz mit den nötigen Parametern zur Umrechnung versorgt werden muss. Gradient und Offset müssen in diesem Fall nicht gesondert bereitgestellt werden, sondern sind durch den vorgegebenen Funktionsbaustein bekannt.

Es besteht ein Bedarf an Möglichkeiten, Sensoren und Aktuatoren sowie gegebenenfalls andere Einheiten möglichst flexibel und einfach in Netzwerken und datentechnisch verbundenen Systemen einsetzen zu können.

Die Aufgabe der Erfindung besteht demnach darin, ein System und ein Verfahren der eingangs bezeichneten Art vorteilhaft weiterzubilden, insbesondere hinsichtlich einer robusten Funktionsweise und des flexiblen Einsatzes verschiedener Sensoren, Aktuatoren oder anderer Geräte.

Diese Aufgabe wird durch ein System, eine Kommunikationseinheit und ein Verfahren gemäß den unabhängigen Ansprüchen gelöst. Vorteilhafte Ausgestaltungen und Weiterbildungen der Erfindung sind in den abhängigen Ansprüchen angegeben.

Das System zum Bereitstellen eines Parameterwertes über eine datentechnische Verbindung umfasst ein erstes Gerät, das dazu eingerichtet ist, den Parameterwert in einer ersten Repräsentation auszugeben, sowie eine Kommunikationseinheit, die dazu eingerichtet ist, den Parameterwert in der ersten Repräsentation zu empfangen, anhand des Parameterwerts in der ersten Repräsentation den Parameterwert in der zweiten Repräsentation zu bestimmen und den Parameterwert in der zweiten Repräsentation an ein zweites Gerät zu übertragen.

Bei einer beispielhaften Ausbildung des Systems kann das erste Gerät als Sensoreinheit ausgebildet sein, welche dazu eingerichtet ist, in Abhängigkeit von dem Parameter einen Messwert zu erzeugen und als Parameterwert in der ersten Repräsentation auszugeben. Bei diesem Beispiel kann ferner die Kommunikationseinheit dazu eingerichtet sein, anhand des Messwertes den Parameterwert in der zweiten Repräsentation zu bestimmen und an das zweite Gerät, etwa eine Teilnehmereinheit eines datentechnischen Systems, zu übertragen.

Eine grundlegende Idee der Erfindung liegt also darin, dem Nutzer die Verwendung des Sensors vorteilhafterweise zu erleichtern und beispielsweise bei der PLC-Programmierung ein Umrechnen von Sensorwerten, die als Ganzzahl übertragen werden, in einen Gleitkommawert in geeigneter Einheit zu erleichtern oder überflüssig zu machen. Die Konvertierung des von der Sensoreinheit bereitgestellten ganzzahligen Wertes wird hierfür durch eine zentrale Einheit des Systems oder Netzwerks ausgeführt, beispielsweise durch eine als "Master" definierte Einheit, wie etwa einen IO-Link Master in einem entsprechenden IO-Link-Kommunikationssystem.

Entsprechend müssen beim Programmieren der speicherprogrammierbaren Schaltung der Gradient und der Offset nicht mehr vom PLC-Programmierer ermittelt werden. Ferner wird es unnötig, zur Umrechnung und Auswertung der Messwerte jeweils einen Funktionsbaustein pro Sensor zu implementieren. Die damit einhergehenden Rechenzeiten sowie die Anforderungen an den Programmspeicher werden dadurch vorteilhafterweise verringert.

Bei einer anderen beispielhaften Ausbildung des Systems kann das erste Gerät als Teilnehmereinheit ausgebildet sein, während das zweite Gerät als Aktuator ausgebildet ist. In diesem Fall kann die Teilnehmereinheit dazu eingerichtet sein, den Parameterwert in der ersten Repräsentation, etwa eine Steuergröße oder Zielgröße, auszugeben. Bei diesem Beispiel kann ferner die Kommunikationseinheit dazu eingerichtet sein, anhand des Parameterwertes in der ersten Repräsentation den Parameterwert in der zweiten Repräsentation zu bestimmen und an das zweite Gerät, etwa einen Aktuator oder eine Einheit mit einem Aktuator, zu übertragen.

In diesem Fall ermöglicht das System dem Nutzer eine vereinfachte Nutzung des Aktuators, da beispielsweise bei der PLC-Programmierung ein Umrechnen einer Ziel- oder Steuergröße von einem Gleitkommawert in eine Ganzzahl zur Übertragung an den Aktuator erleichtert oder überflüssig gemacht wird. Die Konvertierung des von der Teilnehmereinheit bereitgestellten Gleitkomma-Wertes wird dabei durch die Kommunikationseinheit, das heißt eine zentrale Einheit des Systems oder Netzwerks, insbesondere durch den IO-Master ausgeführt, beispielsweise durch eine als "Master" definierte Einheit, wie etwa einen IO-Link Master in einem entsprechenden IO-Link-Kommunikationssystem.

Das erste und das zweite Gerät können auf verschiedene Weisen als mit der Kommunikationseinheit direkt oder indirekt koppelbare Einheiten ausgebildet sein. Auch die erste und zweite Repräsentation des Parameterwerts können unterschiedlich definiert werden, insbesondere als Darstellungen des Wertes eines Parameters mittels verschiedener Konventionen, etwa Datentypen oder Übertragungsarten.

Bei einer Ausbildung ist der Parameterwert ein Wert eines physikalischen Parameters, insbesondere einer Temperatur, eines Drucks, einer Kraft, einer Masse, einer Helligkeit, einer Geschwindigkeit, einer Beschleunigung, eines elektrischen Widerstandes, einer Spannung oder eines Stroms. Dadurch sind vorteilhafterweise die Werte besonders relevanter Parameter erfassbar und bereitstellbar.

Bei einer Ausbildung ist die Kommunikationseinheit ferner dazu eingerichtet, beim Bestimmen des Parameterwertes in der zweiten Repräsentation eine Umwandlung zwischen verschiedenen Datentypen durchzuführen. Das heißt, der Parameterwert in der ersten Repräsentation wird durch Umwandeln des Datentyps in die zweite Repräsentation überführt. Dadurch kann der Wert vorteilhafterweise direkt in dem gewünschten beziehungsweise für das zweite Gerät geeigneten Datentyp bereitgestellt werden.

Bei einer Ausbildung ist das erste Gerät, beispielsweise eine Sensoreinheit, dazu eingerichtet, den Parameterwert in der ersten Repräsentation als ganzzahligen Wert auszugeben, insbesondere als Integer-Wert. Alternativ oder zusätzlich ist die Kommunikationseinheit dazu eingerichtet, den Parameterwert in der zweiten Repräsentation als normierten Ganzzahlwert und/oder als Gleitkommawert zu bestimmen, insbesondere als Float-Wert und/oder als Gleitkommawert in Form eines String. Insbesondere kann der Parameterwert als Float-Wert an das zweite Gerät, beispielsweise eine Teilnehmereinheit, übertragen werden. Dadurch können vorteilhafterweise standardmäßige Sensoren verwendet werden, deren Messwerte als Integer bereitgestellt werden, etwa als 16-bit Integerwert.

Bei einer weiteren Ausbildung kann umgekehrt vorgesehen sein, dass das erste Gerät dazu eingerichtet ist, den Parameterwert in der ersten Repräsentation als normierten Ganzzahlwert und/oder als Gleitkommawert auszugeben, insbesondere als Float-Wert und/oder als Gleitkommawert in Form eines String. Alternativ oder zusätzlich ist dabei die Kommunikationseinheit dazu eingerichtet, den Parameterwert in der zweiten Repräsentation als ganzzahligen Wert zu bestimmen, insbesondere als Integer-Wert.

Um den Parameterwert als normierten Ganzzahlwert zu bestimmen, kann insbesondere eine feste von der verwendeten Sensoreinheit oder einer anderen Einheit unabhängige Darstellung des Messwertes bestimmt werden.

Ferner kann für die Bestimmung und/oder Übertragung des Parameterwerts vorgesehen sein, dass ein Gleitkommawert oder ein anderer Wert als String, das heißt mit einem für Text oder Zeichen geeigneten Datentyp, vorliegt. Beispielsweise kann dabei das JSON-Format oder XML-Format genutzt werden, beispielsweise in der Form: value = "3.1414927". Dadurch können gegebenenfalls Protokolle wie *Message Queuing Telemetry Transport* (MQTT), *Representational state transfer* (REST), *Open Process Communications* (OPC), *OLE for Process Control* und Ähnliches vereinfacht genutzt werden.

Bei einer Ausbildung sind das erste Gerät und die Kommunikationseinheit über ein IO-Link-System datentechnisch miteinander verbunden. Dabei ist das erste Gerät insbesondere dazu eingerichtet, den Wert des Parameters über das IO-Link-System an die Kommunikationseinheit zu übertragen. Dabei ist insbesondere das erste Gerät als IO-Link-Device und die Kommunikationseinheit als IO-Link-Master eingerichtet. Die Einbindung von Geräten wie Sensoren oder Aktuatoren in ein IO-Link-System oder in ein Netzwerk eines ähnlichen Standards erlaubt es vorteilhafterweise, auf eine große Zahl von bereits angebotenen Geräten zurückzugreifen. Ferner kann ein solches System besonders einfach konfiguriert werden.

Bei einer Ausbildung sind die Kommunikationseinheit und das zweite Gerät über einen Feldbus datentechnisch miteinander verbunden. Dabei ist die Kommunikationseinheit insbesondere dazu eingerichtet, den Parameterwert in der zweiten Repräsentation über den Feldbus an das zweite Gerät zu übertragen. Dabei ist die Kommunikationseinheit insbesondere als Feldbus-Slave und das zweite Gerät als Feldbus-Master eingerichtet. Dadurch kann vorteilhafterweise die in vielen Kontexten an sich bekannte Übertragung von Daten *via* ein Bussystem genutzt werden, insbesondere mit einem Feldbus. Vor allem im Automobilbereich sowie in der Automatisierungstechnik ist eine entsprechende Infrastruktur bereits verfügbar.

Bei einer weiteren Ausbildung kann vorgesehen sein, dass die Kommunikationseinheit und das erste Gerät über einen Feldbus datentechnisch miteinander verbunden sind. Dabei ist das erste Gerät insbesondere dazu eingerichtet ist, den Parameterwert in der ersten Repräsentation über den Feldbus an die Kommunikationseinheit zu übertragen. Dabei ist die Kommunikationseinheit insbesondere als Feldbus-Slave und das erste Gerät als Feldbus-Master eingerichtet.

Bei einer weiteren Ausbildung kann vorgesehen sein, dass das zweite Gerät und die Kommunikationseinheit über ein IO-Link-System datentechnisch miteinander verbunden sind, wobei insbesondere die Kommunikationseinheit dazu eingerichtet ist, den Parameterwert in der zweiten Repräsentation über das IO-Link-System an das zweite Gerät zu übertragen. Dabei kann insbesondere das zweite Gerät als IO-Link-Device und die Kommunikationseinheit als IO-Link-Master eingerichtet sein.

Es sind dementsprechend zwei beispielhafte Fälle vorgesehen: Der Parameterwert in der ersten Repräsentation kann von dem ersten Gerät, etwa von einem Sensor, über ein IO-Link-System an die Kommunikationseinheit übertragen werden. Dort erfolgt dann die Umwandlung in die zweite Repräsentation und der Parameterwert wird in der zweiten Repräsentation über einen Feldbus an das zweite Gerät überragen. Umgekehrt kann der Parameterwert in der ersten Repräsentation von dem ersten Gerät über einen Feldbus an die Kommunikationseinheit übertragen werden, wo dann die Umwandlung in die zweite Repräsentation erfolgt und der Parameterwert in der zweiten Repräsentation über ein IO-Link-System an das zweite Gerät übertragen wird, etwa an einen Aktuator.

Bei weiteren Ausführungsbeispielen kann alternativ oder zusätzlich ein anderes Kommunikationsverfahren verwendet werden, etwa über eine Ethernetverbindung.

Bei einer Ausbildung ist die Kommunikationseinheit dazu eingerichtet, Initialisierungsdaten betreffend das erste Gerät und/oder das zweite Gerät zu empfangen und den Parameterwert in der zweiten Repräsentation ferner anhand der empfangenen Initialisierungsdaten zu bestimmen. Dabei ist insbesondere das zweite Gerät und/oder das erste Gerät dazu eingerichtet, die Initialisierungsdaten bereitzustellen. Das Bereitstellen der Initialisierungsdaten kann beispielsweise bei einem Einstellen via *Generic Station Description Markup Language* (GSDML) oder mittels eines anderen Verfahrens erfolgen.

Beispielsweise kann das zweite Gerät als Teilnehmereinheit ausgebildet sein, die Initialisierungsdaten betreffend eine Sensoreinheit als erstes Gerät bereitstellt und an die Kommunikationseinheit überträgt. Umgekehrt kann bei einem anderen Beispiel das erste Gerät als Teilnehmereinheit ausgebildet sein, die Initialisierungsdaten betreffend einen Aktuator als zweites Gerät bereitstellt und an die Kommunikationseinheit überträgt. Die Kommunikationseinheit erhält dadurch insbesondere Informationen darüber, um welchen Datentyp und/oder welche Konvention für die erste und zweite Repräsentation des Parameterwertes anzuwenden sind.

Bei einer weiteren Ausbildung werden keine Initialisierungsdaten an die Kommunikationseinheit übertragen, insbesondere nicht von der Teilnehmereinheit. In diesem Fall kann beispielsweise die Kommunikationseinheit automatisch erkennen, dass für die angeschlossene Sensoreinheit ein von der Kommunikationseinheit unterstütztes Profil anwendbar ist, so können die Initialisierungsdaten anhand des anwendbaren Profils bestimmt werden, etwa durch Auffinden der Initialisierungsdaten in einer Datenbank oder einem Speicher. Dabei kann optional zudem vorgesehen sein, dass von der Teilnehmereinheit eine Information an die Kommunikationseinheit übertragen wird, dass der Parameterwert ,automatisch nach Profil' bestimmt werden soll, oder ob dies nicht vorgesehen ist, das heißt eine Ja/Nein Entscheidung.

Die Initialisierungsdaten können beispielsweise bei einer Inbetriebnahme der Anlage, des Sensors, der Teilnehmereinheit und/oder der Kommunikationseinheit übertragen werden. Weitere Auslöser für die Übertragung der Initialisierungsdaten können beispielsweise eine geänderte Konfiguration des Systems, ein Einbinden einer neuen Sensoreinheit, eine Veränderung von Einstellungen oder andere Ereignisse sein. Die Übertragung der Initialisierungsdaten erfolgt insbesondere automatisch oder auf eine Nutzereingabe hin. Ferner kann die Übertragung automatisch auf eine Anforderung durch die Kommunikationseinheit erfolgen.

Die Initialisierungsdaten betreffend die Sensoreinheit können beispielsweise eine Information darüber umfassen, ob die Sensoreinheit eine Profilinformation bereitstellt oder nicht. Sie können ferner Informationen über einen Offset und/oder Gradienten umfassen. Die Initialisierungsdaten können beispielsweise eine konkrete Profil-ID für ein von der Sensoreinheit unterstütztes Profil umfassen.

Bei einer weiteren Ausbildung kann eine Anweisung umfasst sein, ob automatisch ein für die Sensoreinheit anwendbares Profil bestimmt werden soll, um den Parameterwert zu bestimmen; eine solche Anweisung kann insbesondere eine Ja/Nein-Entscheidung umfassen, ob der Parameterwert ,automatisch nach Profil' bestimmt werden soll, oder ob dies nicht vorgesehen ist.

Dabei können die Initialisierungsdaten zumindest einen Wert eines Offset und/oder eines Gradienten zum Bestimmen des Parameterwertes in der zweiten Repräsentation anhand des Parameterwertes in der ersten Repräsentation umfassen. Insbesondere umfassen die Initialisierungsdaten dabei sensorspezifische Werte für Offset und/oder Gradient.

Auf diese Weise können die für die Umrechnung relevanten Parameter vorteilhafterweise besonders einfach und schnell bereitgestellt werden.

Bei einer Ausbildung ist das zweite Gerät, etwa eine Teilnehmereinheit, dazu eingerichtet, die Initialisierungsdaten bereitzustellen und an die Kommunikationseinheit zu übertragen.

Insbesondere können die Initialisierungsdaten ferner weitere Informationen über einer Konfiguration des Systems umfassen, etwa über sämtliche an die Kommunikationseinheit angeschlossenen Sensoreinheit und/oder weiteren Einheiten, deren Eigenschaften und/oder Konfigurationsparameter.

Bei einem ersten Gerät, beispielsweise einer Sensoreinheit, etwa einem IO-Link-Sensor ohne Profilunterstützung nach IO-Link Smart Sensor Profile ED2, können demnach Gradient und Offset mittels Parametrierung in die Kommunikationseinheit, die etwa als IO-Link-Master konfiguriert sein kann, geschrieben werden. Die Kommunikationseinheit ist dann dazu eingerichtet, anhand dieser Daten die von der Sensoreinheit bereitgestellten Ganzzahlen in Gleitkommawerte umzurechnen und diese an die speicherprogrammierbare Schaltung zu übertragen, etwa über einen Feldbus. Bei der speicherprogrammierbaren Schaltung kann dieser Wert somit direkt benutzt werden, ohne Bedarf für eine weitere Umrechnung.

Ferner kann vorgesehen sein, dass bei der Parametrierung der Kommunikationseinheit nicht Gradient und Offset als Parameter übergeben werden müssen, sondern dass stattdessen ein bestimmter Sensor eines Herstellers anhand von Identifikationsdaten ausgewählt wird, etwa anhand einer Artikelbezeichnung. Anhand dieser Angaben werden Parameter wie Gradient und Offset für den spezifischen Sensor bereitgestellt und die relevanten Parameter eigenständig von der Kommunikationseinheit erfasst. Dies erleichtert die Programmierung zusätzlich und erlaubt es wiederum, den gemessenen Parameter automatisch im gewünschten Format bereitzustellen, beispielsweise im Datentyp einer Gleitkommazahl, und etwa auf dem Feldbus zu übertragen.

Bei einer Ausbildung ist das erste Gerät, etwa eine Sensoreinheit, und/oder das zweite Gerät, etwa ein Aktuator, dazu eingerichtet, Profildaten an die Kommunikationseinheit zu übertragen, wobei die Kommunikationseinheit dazu eingerichtet ist, anhand der Profildaten den Parameterwert in der zweiten Repräsentation zu bestimmen. Insbesondere werden anhand der Profildaten Parameter für Offset und Gradient bestimmt.

Aus den Profildaten geht daher insbesondere hervor, in welcher ersten Repräsentation der Parameterwert zunächst bereitgestellt wird und in welcher zweiten Repräsentation der Parameterwert schließlich ausgegeben werden soll.

Insbesondere kann dabei vorgesehen sein, dass Parameter wie Gradient und Offset der Kommunikationseinheit durch das von der Sensoreinheit verwendete und bereitgestellte Profil bekannt sind. Der Sensor überträgt Informationen über das Profil an die Kommunikationseinheit, welche dann anhand dieser Parameter einen etwa als Ganzzahl bereitgestellten Wert umwandelt, etwa in einen Gleitkommawert, und ihn im Gleitkommaformat über den Feldbus an die speicherprogrammierbare Schaltung einer Teilnehmereinheit überträgt. Dort kann der Wert direkt benutzt werden, ohne dass zuvor eine weitere Umrechnung erfolgen muss.

Bei der Programmierung des zweiten Geräts, etwa einer Teilnehmereinheit, muss in diesem Fall lediglich die Information angegeben werden, dass das erste Gerät, etwa eine angeschlossene Sensoreinheit, das Profil unterstützt, wobei diese Eignung bei einer weiteren Ausbildung auch automatisch bestimmt werden kann, etwa anhand von Daten über die Art oder den Typ der angeschlossenen Sensoreinheit. Dies erleichtert die Programmierung noch weiter und erlaubt es, automatisch auf dem Feldbus den gemessenen Parameter im gewünschten Format zu übertragen, etwa als Gleitkommazahl im Datentyp Float.

Bei einer weiteren Ausbildung bestimmt die Kommunikationseinheit automatisch die Unterstützung eines Profils durch das erste Gerät, beispielsweise eine Sensoreinheit, etwa durch Auslesen von Daten des ersten Geräts. Eine spezielle Initialisierung durch das zweite Gerät ist dann nicht erforderlich, das heißt, es kann auf das Übertragen der Profildaten an die Kommunikationseinheit verzichtet werden.

Die Kommunikationseinheit für ein System zum Bereitstellen eines Parameterwertes über eine datentechnische Verbindung umfasst eine erste Schnittstelle zum datentechnischen Koppeln mit einem ersten Gerät, eine zweite Schnittstelle zum datentechnischen Koppeln mit einem zweiten Gerät und ein Steuermodul. Dabei ist das Steuermodul dazu eingerichtet, mittels der ersten Schnittstelle den Parameterwert in einer ersten Repräsentation zu empfangen, anhand des empfangenen Parameterwertes in der ersten Repräsentation den Parameterwert in einer zweiten Repräsentation zu bestimmen und den Parameterwert in der zweiten Repräsentation mittels der zweiten Schnittstelle auszugeben.

Die Kommunikationseinheit ist insbesondere dazu ausgebildet, in dem oben erläuterten System betrieben zu werden. Sie weist daher dieselben Vorteile auf wie das erfindungsgemäße System.

Die Kommunikationseinheit ist demnach insbesondere dazu eingerichtet, eine Übertragung des Parameterwertes von dem ersten Gerät an das zweite Gerät zu ermöglichen, wobei eine Umwandlung von einer ersten Repräsentation - wie sie das erste Gerät bereitstellt - zu einer zweiten Repräsentation - die das zweite Gerät erwartet - erfolgt. Durch diesen Vermittlungsschritt vereinfacht die Kommunikationseinheit die Kommunikation zwischen dem ersten und zweiten Gerät, beispielsweise zum Auslesen eines Sensors oder zum Ansteuern eines Aktuators.

Bei dem Verfahren zum Bereitstellen eines Parameterwertes über eine datentechnische Verbindung wird der Parameterwert in einer ersten Repräsentation an eine Kommunikationseinheit übertragen. Durch die Kommunikationseinheit wird anhand des Parameterwertes in der ersten Repräsentation der Parameterwert in einer zweiten Repräsentation bestimmt und der Wert des Parameterwerts in der zweiten Repräsentation wird ausgegeben.

Der Parameterwert in der ersten Repräsentation kann beispielsweise von einer Sensoreinheit als einem ersten Gerät erzeugt werden. Ferner kann der Parameterwert in der zweiten Repräsentation insbesondere an eine Teilnehmereinheit, einen Aktuator oder ein anderes zweites Gerät übertragen werden.

Das Verfahren ist insbesondere dazu ausgebildet, das System zu betreiben. Es weist daher dieselben Vorteile auf wie das erfindungsgemäße System.

Bei einer Ausbildung werden in einem Initialisierungsschritt, beispielsweise nach einem Anschalten, einer Inbetriebnahme oder einer Konfigurationsänderung des Systems oder ausgelöst durch ein anderes Ereignis, Initialisierungsdaten betreffend ein erstes Gerät, etwa eine Sensoreinheit zum Erfassen eines Messwertes, an die Kommunikationseinheit übertragen. Der Parameterwert in der zweiten Repräsentation wird ferner anhand der empfangenen Initialisierungsdaten bestimmt. Die Übertragung der Initialisierungsdaten kann beispielsweise bei einem Einstellen via *Generic Station Description Markup Language* (GSDML) oder mittels eines anderen Verfahrens erfolgen.

Nachfolgend wird die Erfindung anhand der anliegenden Zeichnungen näher erläutert. Es zeigen:
- **Figur 1**: ein Ausführungsbeispiel des Systems;
- **Figur 2**: ein erstes Ausführungsbeispiel des Verfahrens zum Betreiben des Systems;
- **Figur 3**: ein zweites Ausführungsbeispiel des Verfahrens zum Betreiben des Systems; und .
- **Figur 4**: ein drittes Ausführungsbeispiel des Verfahrens zum Betreiben des Systems.

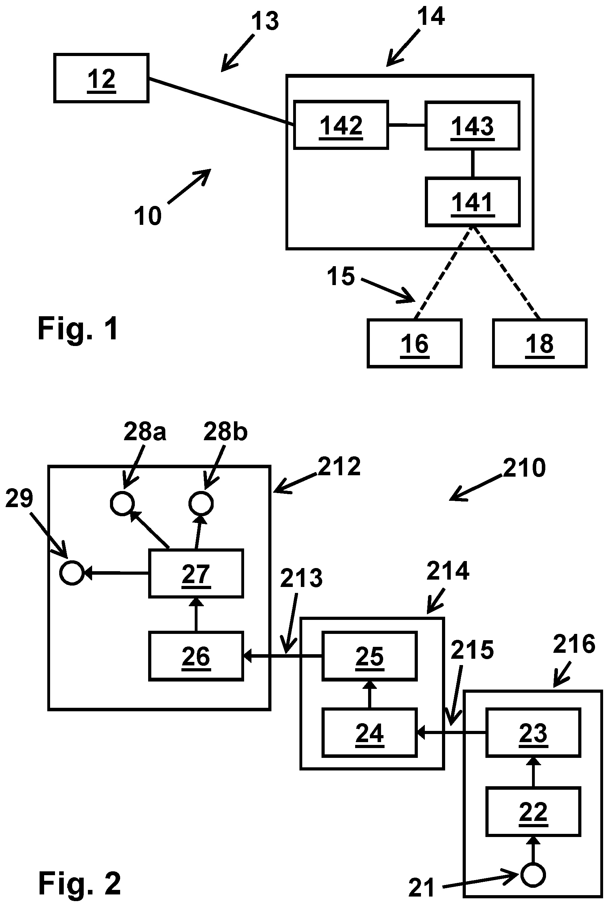

Mit Bezug zu **Figur 1** wird ein Ausführungsbeispiel des Systems erläutert.

Das System 10 umfasst eine Kommunikationseinheit 14.

Die Kommunikationseinheit 14 umfasst dabei eine erste 141 und zweite Schnittstelle 142 sowie ein Steuermodul 143.

Die Kommunikationseinheit 14 ist mittels der ersten Schnittstelle 141 über ein IO-Link-System 15 datentechnisch mit einem ersten Gerät 16, in diesem Fall mit einer Sensoreinheit 16, gekoppelt.

Sie ist ferner mittels der zweiten Schnittstelle 142 über das IO-Link-System 15 datentechnisch mit einer weiteren Einheit 18 gekoppelt.

Das IO-Link-System 15 ist dabei auf an sich bekannte Weise ausgebildet.

Bei dem Ausführungsbeispiel ist die Kommunikationseinheit 14 als IO-Link-Master des IO-Link-Systems 15 konfiguriert, während die Sensoreinheit 16 sowie die weitere Einheit 18 als IO-Link-Device konfiguriert sind.

Alternativ oder zusätzlich kann ein anderes Protokoll oder Verfahren zur datentechnischen Koppelung der Sensoreinheit 16 und der weiteren Einheit 18 mit der Kommunikationseinheit 14 genutzt werden.

Die Kommunikationseinheit 14 ist ferner über einen Feldbus 13 datentechnisch mit einem zweiten Gerät 12, in diesem Fall mit einer Teilnehmereinheit 12, gekoppelt.

Der Feldbus 13 ist dabei auf an sich bekannte Weise ausgebildet.

Bei dem Ausführungsbeispiel ist die Teilnehmereinheit 12 als Feldbus-Master konfiguriert, während die Kommunikationseinheit 14 als Feldbus-Slave konfiguriert ist.

Alternativ oder zusätzlich kann ein anderes Protokoll oder Verfahren zur datentechnischen Koppelung der Teilnehmereinheit 12 mit der Kommunikationseinheit 14 genutzt werden.

Die Sensoreinheit 16 ist dabei auf an sich bekannte Weise dazu ausgebildet, einen Parameter zu erfassen. Dabei wird ein Messwert erzeugt.

Der Messwert wird über das IO-Link-System 15 ausgegeben beziehungsweise er kann über das IO-Link-System 15 von der Sensoreinheit 16 abgerufen werden.

Der Parameter kann etwa ein physikalischer Parameter sein, insbesondere eine Temperatur, ein Druck, eine Kraft, eine Masse, eine Helligkeit, eine Geschwindigkeit, eine Beschleunigung, ein elektrischer Widerstand, eine Spannung oder ein Strom.

Bei dem vorliegenden Ausführungsbeispiel ist die Sensoreinheit 16 zum Erfassen einer Temperatur eingerichtet.

Die weitere Einheit 18 kann auf verschiedene Weisen ausgebildet sein, etwa als weitere Sensoreinheit, beispielsweise um einen anderen Parameter zu erfassen, oder als Eingabeeinheit, Aktuator oder Steuereinheit.

Die Teilnehmereinheit 12 ist bei dem Ausführungsbeispiel als von einem Nutzer konfigurierbare Steuerungseinheit ausgebildet. Sie umfasst bei dem Beispiel eine speicherprogrammierbare Schaltung, SPS beziehungsweise PLC. Zum Programmieren können an sich bekannte Werkzeuge verwendet werden, etwa TIA oder andere Verfahren zur SPS-Programmierung und/oder unter Verwendung eines GSDML-Standards (*Generic Station Description Markup Language*)*.*

Bei einem weiteren Ausführungsbeispiel kann statt der Sensoreinheit 16 ein Aktuator oder ein anderes Gerät mittels IO-Link mit der Kommunikationseinheit 14 gekoppelt sein.

Mit Bezug zu **Figur 2** wird ein erstes Ausführungsbeispiel des Verfahrens zum Betreiben des Systems erläutert. Dabei wird von einem System ausgegangen, dessen Aufbau im Wesentlichem dem oben erläuterten Ausführungsbeispiel entspricht und das daher nicht nochmals im Detail erläutert wird. Die Darstellung der Module, Funktionsblöcke, Parameter, Daten und Abläufe ist lediglich schematisch zu verstehen.

Das System 210 umfasst eine Kommunikationseinheit 214, die über ein IO-Link-System 215 mit einem ersten Gerät, nämlich einer Sensoreinheit 216 gekoppelt ist.

Dabei ist die Kommunikationseinheit 214 als IO-Link-Master und die Sensoreinheit 216 als IO-Link-Device konfiguriert. In Figur 2 wird dies durch ein funktionales Modul "IO-Link-Master" 24 der Kommunikationseinheit 214 und ein funktionales Modul "IO-Link-Device" 23 der Sensoreinheit 216 dargestellt, die jeweils Schnittstellen zu dem IO-Link-System 215 repräsentieren.

Die Kommunikationseinheit 214 ist ferner über einen Feldbus 213 mit einem zweiten Gerät, nämlich einer Teilnehmereinheit 212 gekoppelt.

Dabei ist die Teilnehmereinheit 212 als Feldbus-Master und die Kommunikationseinheit 214 als Feldbus-Slave konfiguriert. In Figur 2 wird dies durch ein funktionales Modul "Feldbus-Master" 26 der Teilnehmereinheit 212 und ein funktionales Modul "Feldbus-Slave" 25 der Kommunikationseinheit 214 dargestellt, die jeweils Schnittstellen zu dem Feldbus-Netzwerk 213 repräsentieren.

Beim Betreiben des Systems 210 erfasst die Sensoreinheit 216 einen Parameter 21, bei dem Beispiel eine Temperatur 21. In Abhängigkeit von dem Parameter 21 wird bei einer Messung 22 ein Messwert erzeugt.

Beispielsweise verändert sich in Abhängigkeit von der Temperatur 21 oder einem anderen Parameter eine Spannung, die dann bei der Messung 22 von der Sensoreinheit 216 erfasst wird.

Der Messwert wird bei dem Ausführungsbeispiel als Ganzzahl erzeugt, insbesondere als Integer-Wert.

Der bei der Messung 22 ermittelte Messwert wird über das IO-Link-System 215 von der Sensoreinheit 216 an die Kommunikationseinheit 214 übertragen. Insbesondere erfolgt die Übertragung dabei mittels des funktionalen Moduls "IO-Link-Device" 23 der Sensoreinheit 216 und des funktionalen Moduls "IO-Link-Master" 24 der Kommunikationseinheit 214.

Bei der Kommunikationseinheit 214 wird der Messwert von dem funktionalen Modul "IO-Link-Master" 24 an das funktionale Modul "Feldbus-Slave" 25 und von diesem über das Feldbus-Netzwerk 213 an das funktionale Modul "Feldbus-Master" 26 der Teilnehmereinheit 212 übertragen.

Die Übertragung des Messwertes über das Feldbus-Netzwerk 213 erfolgt dabei als Ganzzahl, insbesondere als Integer-Wert.

Bei der Teilnehmereinheit 212 wird der empfangene Messwert an einen Funktionsbaustein 27 zum Konvertieren des Messwertes in einen Wert des Parameters 21 übertragen.

Zur Konvertierung des Messwertes greift der Funktionsbaustein 27 auf Umrechnungsparameter 28a, 28b zu, nämlich auf einen Offset 28a und einen Gradienten 28b.

Die Teilnehmereinheit 212 bestimmt nun den Parameterwert 29, insbesondere als Gleitkommazahl, etwa einen Float-Wert.

Die Umrechnungsparameter 28a, 28b werden bei dem Ausführungsbeispiel bei einer initialen Programmierung der Teilnehmereinheit 212 bereitgestellt, insbesondere durch eine Nutzereingabe.

Bei weiteren Ausführungsbeispielen kann die Sensoreinheit 216 dazu eingerichtet sein, Profildaten bereitzustellen. Anhand der Profildaten werden dann die Umrechnungsparameter 28a, 28b für den Funktionsbaustein 27 der Teilnehmereinheit 212 bestimmt. Die Profildaten können dabei die Umrechnungsparameter 28a, 28b selbst umfassen oder sie können eine Identifikation der Umrechnungsparameter 28a, 28b umfassen, etwa eine Identifikationsnummer eines Profils, in dem die Umrechnungsparameter 28a, 28b beschrieben sind. Die Profildaten werden dabei insbesondere bei einer Initialisierung der Sensoreinheit 216 oder eines anderen Elements des Systems 210 übertragen, automatisch oder auf ein bestimmtes Initialisierungssignal hin.

Bei einem weiteren Beispiel ist statt der Sensoreinheit 216 ein Aktuator oder anderes Gerät vorgesehen und es wird ein Parameterwert von der Teilnehmereinheit 212 über die Kommunikationseinheit 214 an den Aktuator übertragen. In diesem Fall erfolgt die Umrechnung umgekehrt von einem Float-Wert, welchen die Teilnehmereinheit 212 bereitstellt, in einen Integer-Wert zur Ansteuerung des Aktuators. Die oben beschrieben Schritte werden dabei analog durchgeführt, mit vertauschten Rollen des ersten 216 und zweiten Geräts 212 beziehungsweise mit einer Übertragung des Parameterwertes von der Teilnehmereinheit 212 an den Aktuator statt von der Sensoreinheit 216 an die Teilnehmereinheit 212.

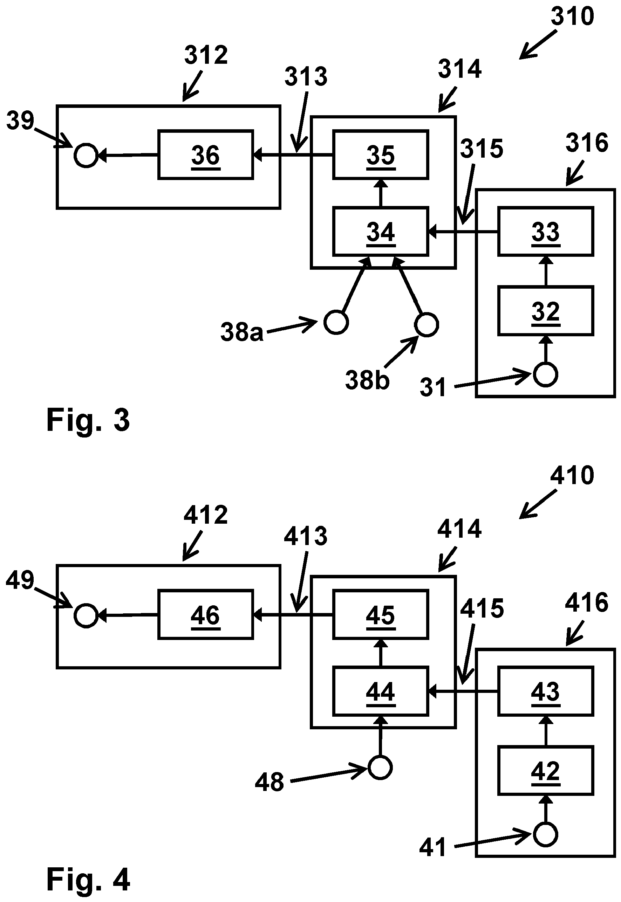

Mit Bezug zu **Figur 3** wird ein zweites Ausführungsbeispiel des Verfahrens zum Betreiben des Systems erläutert. Dabei wird von einem System ausgegangen, dessen Aufbau im Wesentlichem dem oben erläuterten Ausführungsbeispiel entspricht und das daher nicht nochmals im Detail erläutert wird. Die Darstellung der Module, Funktionsblöcke, Parameter, Daten und Abläufe ist lediglich schematisch zu verstehen. Ferner werden Verfahrensschritte und Abläufe, die analog zu dem oben erläuterten ersten Ausführungsbeispiel eines Verfahrens zum Betreiben des Systems ausgebildet sind, nicht nochmals im Detail erläutert.

Das System 310 umfasst eine Kommunikationseinheit 314, die über ein IO-Link-System 315 mit einem ersten Gerät, nämlich einer Sensoreinheit 316 gekoppelt ist.

Dabei ist die Kommunikationseinheit 314 als IO-Link-Master und die Sensoreinheit 316 als IO-Link-Device konfiguriert. In Figur 3 wird dies durch ein funktionales Modul "IO-Link-Master" 34 der Kommunikationseinheit 314 und ein funktionales Modul "IO-Link-Device" 33 der Sensoreinheit 316 dargestellt, die jeweils Schnittstellen zu dem IO-Link-System 315 repräsentieren.

Die Kommunikationseinheit 314 ist ferner über einen Feldbus 313 mit einem zweiten Gerät, nämlich einer Teilnehmereinheit 312 gekoppelt.

Dabei ist die Teilnehmereinheit 312 als Feldbus-Master und die Kommunikationseinheit 314 als Feldbus-Slave konfiguriert. In Figur 3 wird dies durch ein funktionales Modul "Feldbus-Master" 36 der Teilnehmereinheit 312 und ein funktionales Modul "Feldbus-Slave" 35 der Kommunikationseinheit 314 dargestellt, die jeweils Schnittstellen zu dem Feldbus-Netzwerk 313 repräsentieren.

Beim Betreiben des Systems 310 erfasst die Sensoreinheit 316 einen Parameter 31, bei dem Beispiel eine Temperatur 31. In Abhängigkeit von dem Parameter 31 wird bei einer Messung 32 ein Messwert erzeugt.

Beispielsweise verändert sich in Abhängigkeit von der Temperatur 31 oder einem anderen Parameter eine Spannung, die dann bei der Messung 32 von der Sensoreinheit 316 erfasst wird.

Der Messwert wird bei dem Ausführungsbeispiel als Ganzzahl erzeugt, insbesondere als Integer-Wert.

Der bei der Messung 32 ermittelte Messwert wird über das IO-Link-System 315 von der Sensoreinheit 316 an die Kommunikationseinheit 314 übertragen. Insbesondere erfolgt die Übertragung dabei mittels des funktionalen Moduls "IO-Link-Device" 33 der Sensoreinheit 316 und des funktionalen Moduls "IO-Link-Master" 34 der Kommunikationseinheit 314.

Bei der Kommunikationseinheit 314 wird anhand des Messwertes ein Wert des Parameters 31 bestimmt. Dies erfolgt bei dem Ausführungsbeispiel mittels des funktionalen Moduls "IO-Link-Master" 34 der Kommunikationseinheit 314, wobei allerdings in anderen Ausführungsbeispielen auch ein weiteres funktionales Modul der Kommunikationseinheit 314 zur Konvertierung vorgesehen sein kann.

Bei der Konvertierung wird der Parameterwert 39 bestimmt, insbesondere als Gleitkommazahl, etwa einen Float-Wert.

Das heißt, bei diesem Ausführungsbeispiel erfolgt die Umrechnung - im Unterschied zu dem oben erläuterten ersten Ausführungsbeispiel - durch die Kommunikationseinheit 314. Insbesondere ist nicht die Teilnehmereinheit 312 für diese Umrechnung verantwortlich.

Bei dem vorliegenden zweiten Ausführungsbeispiel wird über das IO-Link-System 315 ein ganzzahliger Wert übertragen, insbesondere ein Integer-Wert.

Über den Feldbus 313 wird der Parameterwert als eine Gleitkommazahl übertragen, insbesondere als Float-Wert. Dies ist ein wesentlicher Unterschied zu dem oben erläuterten ersten Ausführungsbeispiel, bei dem der Parameterwert als Ganzzahliger Wert übertragen wird, insbesondere als Integer-Wert. Bei weiteren Ausführungsbeispielen kann vorgesehen sein, dass der Parameterwert - statt in einer zweiten Repräsentation als Float-Wert - in der zweiten Repräsentation auf andere Weise dargestellt wird, etwa als normierter Ganzzahlwert, das heißt, der betreffende Wert wird über verschiedene Messstellen einheitlich darstellt.

Die Umrechnung des Parameterwertes durch die Kommunikationseinheit 314 hat unter anderem den Vorteil, dass über den Feldbus 313 direkt der Parameterwert als Gleitkommazahl übertragen wird und die Teilnehmereinheit 312 die Umrechnung nicht mehr selbst vorzunehmen braucht.

Hierdurch kann die Konfiguration der Teilnehmereinheit 312 wesentlich vereinfacht werden, insbesondere weil kein Modul entsprechend dem oben beschriebenen Funktionsbaustein 27 mehr vorgesehen und entwickelt werden muss.

Ferner werden auf diese Weise Zeit und Rechenleistung bei der Datenverarbeitung aufseiten der Teilnehmereinheit 312 eingespart

Zur Konvertierung des Messwertes durch die Kommunikationseinheit 314 wird dabei auf Umrechnungsparameter 38a, 38b zugegriffen, nämlich auf einen Offset 38a und einen Gradienten 38b.

Die Umrechnungsparameter 38a, 38b sind bei dem Ausführungsbeispiel von der Kommunikationseinheit 314 gespeichert oder sie sind durch diese von einer Speichereinheit abrufbar.

Insbesondere werden bei diesem Ausführungsbeispiel die Umrechnungsparameter 38a, 38b bei einer Parametrierung der Kommunikationseinheit 314 bereitgestellt.

Bei dem Ausführungsbeispiel wird die Parametrierung durch die Teilnehmereinheit 312 durchgeführt, das heißt, die Umrechnungsparameter werden beispielsweise allein oder mit Initialisierungsdaten von der Teilnehmereinheit 312 an die Kommunikationseinheit 316 übertragen.

Die Parametrierung kann insbesondere im Rahmen einer Initialisierung erfolgen, bei der Initialisierungsdaten an die Kommunikationseinheit 314 übertragen werden, welche die Umrechnungsparameter 38a, 38b umfassen.

Eine Parametrierung der Kommunikationseinheit 314 kann beispielsweise dann ausgeführt werden, wenn eine Komponente in Betrieb genommen, verändert, ausgewechselt oder aktualisiert wird. Sie kann in regelmäßigen Zeitintervallen oder nach einer bestimmten Betriebsdauer einer oder mehrerer Komponenten des Systems 310 durchgeführt werden. Ferner kann die Parametrierung auf ein äußeres Signal hin erfolgen, etwa auf eine Nutzereingabe hin.

Nach dem Umrechnen des Messwertes in den Parameterwert wird letzterer von dem funktionalen Modul "Feldbus-Slave" 35 der Kommunikationseinheit 314 über das Feldbus-Netzwerk 313 an das funktionale Modul "Feldbus-Master" 36 der Teilnehmereinheit 312 übertragen.

Die Übertragung des Messwertes über das Feldbus-Netzwerk 313 erfolgt dabei als Gleitkommazahl, insbesondere als Float-Wert. Bei weiteren Ausführungsbeispielen kann vorgesehen sein, dass der Parameterwert in einer anderen zweiten Repräsentation übertragen wird, etwa als normierter Ganzzahlwert.

Auch hier kann bei einem weiteren Beispiel statt der Sensoreinheit 316 ein Aktuator oder anderes Gerät vorgesehen sein. In diesem Beispiel kann nun ein Parameterwert von der Teilnehmereinheit 312 über die Kommunikationseinheit 314 an den Aktuator übertragen werden. Die Umrechnung erfolgt umgekehrt von einem Float-Wert, welchen die Teilnehmereinheit 312 bereitstellt, in einen Integer-Wert zur Ansteuerung des Aktuators. Die oben beschrieben Schritte werden dabei analog durchgeführt, mit vertauschten Rollen des ersten 316 und zweiten Geräts 312.

Mit Bezug zu **Figur 4** wird ein drittes Ausführungsbeispiel des Verfahrens zum Betreiben des Systems erläutert. Dabei wird von einem System ausgegangen, dessen Aufbau im Wesentlichem dem oben erläuterten Ausführungsbeispiel entspricht und das daher nicht nochmals im Detail erläutert wird. Die Darstellung der Module, Funktionsblöcke, Parameter, Daten und Abläufe ist lediglich schematisch zu verstehen. Ferner werden Verfahrensschritte und Abläufe, die analog zu den oben erläuterten Ausführungsbeispielen eines Verfahrens zum Betreiben des Systems ausgebildet sind, nicht nochmals im Detail erläutert.

Das System 410 umfasst eine Kommunikationseinheit 414, die über ein IO-Link-System 415 mit einer Sensoreinheit 416 gekoppelt ist.

Dabei ist die Kommunikationseinheit 414 als IO-Link-Master und die Sensoreinheit 416 als IO-Link-Device konfiguriert. In Figur 4 wird dies durch ein funktionales Modul "IO-Link-Master" 44 der Kommunikationseinheit 414 und ein funktionales Modul "IO-Link-Device" 43 der Sensoreinheit 416 dargestellt, die jeweils Schnittstellen zu dem IO-Link-System 415 repräsentieren.

Die Kommunikationseinheit 414 ist ferner über einen Feldbus 413 mit einer Teilnehmereinheit 412 gekoppelt.

Dabei ist die Teilnehmereinheit 412 als Feldbus-Master und die Kommunikationseinheit 414 als Feldbus-Slave konfiguriert. In Figur 4 wird dies durch ein funktionales Modul "Feldbus-Master" 46 der Teilnehmereinheit 412 und ein funktionales Modul "Feldbus-Slave" 45 der Kommunikationseinheit 414 dargestellt, die jeweils Schnittstellen zu dem Feldbus-Netzwerk 413 repräsentieren.

Beim Betreiben des Systems 410 erfasst die Sensoreinheit 416 einen Parameter 41, bei dem Beispiel eine Temperatur 41. In Abhängigkeit von dem Parameter 41 wird bei einer Messung 42 ein Messwert erzeugt.

Beispielsweise verändert sich in Abhängigkeit von der Temperatur 41 oder einem anderen Parameter eine Spannung, die dann bei der Messung 42 von der Sensoreinheit 416 erfasst wird.

Der Messwert wird bei dem Ausführungsbeispiel als Ganzzahl erzeugt, insbesondere als Integer-Wert.

Der bei der Messung 42 ermittelte Messwert wird über das IO-Link-System 415 von der Sensoreinheit 416 an die Kommunikationseinheit 414 übertragen. Insbesondere erfolgt die Übertragung dabei mittels des funktionalen Moduls "IO-Link-Device" 43 der Sensoreinheit 416 und des funktionalen Moduls "IO-Link-Master" 44 der Kommunikationseinheit 414.

Bei der Kommunikationseinheit 414 wird anhand des Messwertes ein Wert des Parameters 41 bestimmt. Dies erfolgt bei dem Ausführungsbeispiel mittels des funktionalen Moduls "IO-Link-Master" 44 der Kommunikationseinheit 414, wobei allerdings in anderen Ausführungsbeispielen auch ein weiteres funktionales Modul der Kommunikationseinheit 414 zur Konvertierung vorgesehen sein kann.

Bei der Konvertierung wird der Parameterwert 49 bestimmt, insbesondere als Gleitkommazahl, etwa einen Float-Wert. Bei weiteren Ausführungsbeispielen kann vorgesehen sein, dass der Parameterwert - statt in einer zweiten Repräsentation als Float-Wert - in der zweiten Repräsentation in einer anderen Repräsentation vorliegt, etwa als normierter Ganzzahlwert, wobei der betreffende Wert wird über verschiedene Messstellen einheitlich dargestellt wird.

Das heißt, bei diesem Ausführungsbeispiel erfolgt die Umrechnung - im Unterschied zu dem oben erläuterten ersten Ausführungsbeispiel - durch die Kommunikationseinheit 414. Insbesondere ist nicht die Teilnehmereinheit 412 für diese Umrechnung verantwortlich.

Bei dem vorliegenden dritten Ausführungsbeispiel wird über das IO-Link-System 415 ein ganzzahliger Wert übertragen, insbesondere ein Integer-Wert.

Über den Feldbus 413 wird der Parameterwert als eine Gleitkommazahl übertragen, insbesondere als Float-Wert. Dies ist ein wesentlicher Unterschied zu dem oben erläuterten ersten Ausführungsbeispiel, bei dem der Parameterwert als Ganzzahliger Wert übertragen wird, insbesondere als Integer-Wert.

Die Vorteile dieser Umrechnung des Parameterwertes durch die Kommunikationseinheit 414 sind analog zu den oben dargestellten Vorteilen.

Die zur Konvertierung des Messwertes durch die Kommunikationseinheit 414 notwendigen Umrechnungsparameter werden bei dem dritten Ausführungsbeispiel anhand von Profildaten bestimmt.

Bei dem Ausführungsbeispiel werden Profildaten 48 an die Kommunikationseinheit 414 gesendet, insbesondere von der Sensoreinheit 416. Die Profildaten 48 umfassen etwa eine Bezeichnung eines Profils, das der Sensoreinheit 416 zugeordnet ist, etwa eine Identifikationsnummer. Anhand der Profildaten 48 kann die Kommunikationseinheit 414 dann entsprechende Umrechnungsparameter wie Offset und Gradient oder einen Skalierungsparameter bestimmen, etwa durch Abrufen der Umrechnungsparameter anhand der Profildaten 48.

Alternativ oder zusätzlich können mit den Profildaten 48 auch direkt Umrechnungsparameter bereitgestellt werden, insbesondere indem von der Sensoreinheit 416 Werte von Umrechnungsparametern an die Kommunikationseinheit 414 übertragen werden.

Die Umrechnungsparameter können auch bei diesem Ausführungsbeispiel von der Kommunikationseinheit 414 gespeichert sein oder sie können durch diese von einer Speichereinheit abrufbar sein.

Bei diesem Ausführungsbeispiel erfolgt ebenfalls eine Parametrierung der Kommunikationseinheit 414, insbesondere durch die Teilnehmereinheit 412.

Bei der Parametrierung empfängt die Kommunikationseinheit 414 eine Information darüber, dass die Sensoreinheit 416 dazu eingerichtet ist, die Profildaten 48 bereitzustellen. Die Kommunikationseinheit 414 kann dadurch so konfiguriert werden, dass sie die Profildaten 48 empfängt und so auswertet, dass die Umrechnungsparameter ermittelt werden.

Die Parametrierung kann insbesondere im Rahmen einer Initialisierung erfolgen, bei der Initialisierungsdaten 48 an die Kommunikationseinheit 414 übertragen werden.

Bei dem Ausführungsbeispiel wird die Parametrierung durch die Teilnehmereinheit 412 durchgeführt, das heißt, bei einer Initialisierung werden Initialisierungsdaten von der Teilnehmereinheit 412 an die Kommunikationseinheit 416 übertragen, um die Kommunikationseinheit 414 für den Empfang von Profildaten 48 von der Sensoreinheit 416 zu konfigurieren.

Bei einem weiteren Ausführungsbeispiel kann vorgesehen sein, dass die Parametrierung über einen Automatismus erfolgt, wobei ein von der Sensoreinheit 416 unterstütztes Profil bestimmt wird. In Abhängigkeit von diesem Profil werden dann die entsprechenden Profildaten für die Sensoreinheit 416 automatisch bestimmt und zum Bestimmen des Parameterwerts verwendet. Die Kommunikationseinheit 414 kann dabei das unterstützte Profil vollautomatisch bestimmen, etwa durch Abrufen entsprechender Informationen über ein unterstütztes Profil von der Sensoreinheit 416, oder ein solcher Automatismus kann aktivierbar sein: Beispielsweise kann die Kommunikationseinheit 414 die Informationen über das unterstützte Profil in Abhängigkeit vom Empfang einer entsprechenden Anweisung von der Teilnehmereinheit 412 abrufen, insbesondere analog zu der oben erläuterten Initialisierung.

Eine Parametrierung der Kommunikationseinheit 414 kann beispielsweise dann ausgeführt werden, wenn eine Komponente in Betrieb genommen, verändert, ausgewechselt oder aktualisiert wird. Sie kann in regelmäßigen Zeitintervallen oder nach einer bestimmten Betriebsdauer einer oder mehrerer Komponenten des Systems 410 durchgeführt werden. Ferner kann die Parametrierung auf ein äußeres Signal hin erfolgen, etwa auf eine Nutzereingabe hin.

Nach dem Umrechnen des Messwertes in den Parameterwert wird letzterer von dem funktionalen Modul "Feldbus-Slave" 45 der Kommunikationseinheit 414 über das Feldbus-Netzwerk 413 an das funktionale Modul "Feldbus-Master" 46 der Teilnehmereinheit 412 übertragen.

Die Übertragung des Messwertes über das Feldbus-Netzwerk 413 erfolgt dabei als Gleitkommazahl, insbesondere als Float-Wert.

Auch hier kann bei einem weiteren Beispiel statt der Sensoreinheit 416 ein Aktuator oder anderes Gerät vorgesehen sein. In diesem Beispiel kann nun ein Parameterwert von der Teilnehmereinheit 412 über die Kommunikationseinheit 414 an den Aktuator übertragen werden. Die Umrechnung erfolgt umgekehrt von einem Float-Wert, welchen die Teilnehmereinheit 412 bereitstellt, in einen Integer-Wert zur Ansteuerung des Aktuators. Die oben beschrieben Schritte werden dabei analog durchgeführt, mit vertauschten Rollen des ersten 416 und zweiten Geräts 412.

### Bezugszeichenliste

- 10,210,310,410: System
- 12, 212, 312, 412: Zweites Gerät; Teilnehmereinheit
- 13,213,313,413: Feldbus
- 14, 214, 314, 414: Kommunikationseinheit
- 15,215,315,415: IO-Link-System
- 16, 216, 316, 416: Erstes Gerät; Sensoreinheit
- 18: Weitere Einheit
- 21, 31, 41: Parameter, Temperatur
- 22, 32, 42: Messung
- 23, 33, 43: IO-Link-Device
- 24, 34, 44: IO-Link-Master
- 25, 35, 45: Fieldbus-Slave
- 26, 36, 46: Fieldbus-Master
- 27: Funktionsbaustein
- 28a, 38a: Umrechnungsparameter; Offset
- 28b, 38b: Umrechnungsparameter; Gradient
- 29, 39, 49: Parameterwert
- 48: Profildaten
- 141: Erste Schnittstelle
- 142: Zweite Schnittstelle
- 143: Steuermodul

## Patentansprüche

1. System (10) zum Bereitstellen eines Parameterwertes über eine datentechnische Verbindung; umfassend
ein erstes Gerät (16), das dazu eingerichtet ist, den Parameterwert in einer ersten Repräsentation auszugeben; sowie
eine Kommunikationseinheit (14), die dazu eingerichtet ist, den Parameterwert in der ersten Repräsentation zu empfangen, anhand des Parameterwertes in der ersten Repräsentation den Parameterwert in einer zweiten Repräsentation zu bestimmen und den Parameterwert in der zweiten Repräsentation an ein zweites Gerät (12) zu übertragen.

2. System (10) gemäß Anspruch 1,
**dadurch gekennzeichnet, dass**
der Parameterwert ein Wert eines physikalischen Parameters ist, insbesondere einer Temperatur, eines Drucks, einer Kraft, einer Masse, einer Helligkeit, einer Geschwindigkeit, einer Beschleunigung, eines elektrischen Widerstands, einer Spannung oder eines Stroms.

3. System (10) gemäß einem der vorhergehenden Ansprüche,
**dadurch gekennzeichnet, dass**
die Kommunikationseinheit (14) ferner dazu eingerichtet ist, beim Bestimmen des Parameterwertes in der zweiten Repräsentation eine Umwandlung zwischen verschiedenen Datentypen durchzuführen.

4. System (10) gemäß einem der vorhergehenden Ansprüche,
**dadurch gekennzeichnet, dass**
das erste Gerät (16) dazu eingerichtet ist, den Parameterwert in der ersten Repräsentation als ganzzahligen Wert auszugeben, insbesondere als Integer-Wert; und/oder
die Kommunikationseinheit (14) dazu eingerichtet ist, den Parameterwert in der zweiten Repräsentation als normierten Ganzzahlwert und/oder als Gleitkommawert zu bestimmen, insbesondere als Float-Wert und/oder als Gleitkommawert in Form eines String.

5. System (10) gemäß einem der vorhergehenden Ansprüche,
**dadurch gekennzeichnet, dass**
das erste Gerät (16) und die Kommunikationseinheit (14) über ein IO-Link-System (15) datentechnisch miteinander verbunden sind; wobei
das erste Gerät (16) insbesondere dazu eingerichtet ist, den Parameterwert in der ersten Repräsentation über das IO-Link-System (15) an die Kommunikationseinheit (14) zu übertragen; wobei
insbesondere das erste Gerät (16) als IO-Link-Device und die Kommunikationseinheit (14) als IO-Link-Master eingerichtet sind.

6. System (10) gemäß einem der vorhergehenden Ansprüche,
**dadurch gekennzeichnet, dass**
die Kommunikationseinheit (14) und das zweite Gerät (12) über einen Feldbus (13) datentechnisch miteinander verbunden sind; wobei
die Kommunikationseinheit (14) insbesondere dazu eingerichtet ist, den Parameterwert in der zweiten Repräsentation über den Feldbus (13) an das zweite Gerät (12) zu übertragen; wobei
die Kommunikationseinheit (14) insbesondere als Feldbus-Slave und das zweite Gerät als Feldbus-Master eingerichtet ist.

7. System (10) gemäß einem der vorhergehenden Ansprüche,
**dadurch gekennzeichnet, dass**
die Kommunikationseinheit (14) dazu eingerichtet ist:
Initialisierungsdaten betreffend das erste Gerät (16) und/oder das zweite Gerät (12) zu empfangen; und
den Parameterwert in der zweiten Repräsentation ferner anhand der empfangenen Initialisierungsdaten zu bestimmen; wobei
insbesondere das zweite Gerät (12) und/oder das erste Gerät (16) dazu eingerichtet ist, die Initialisierungsdaten bereitzustellen.

8. System (10) gemäß Anspruch 7,
**dadurch gekennzeichnet, dass**
die Initialisierungsdaten zumindest einen Wert eines Offset (38a) und/oder eines Gradienten (38b) zum Bestimmen des Parameterwertes in der zweiten Repräsentation anhand des Parameterwertes in der ersten Repräsentation umfassen.

9. System (10) gemäß einem der vorhergehenden Ansprüche,
**dadurch gekennzeichnet, dass**
das erste Gerät (16) und/oder das zweite Gerät (12) dazu eingerichtet ist, Profildaten (48) an die Kommunikationseinheit (14) zu übertragen; wobei
die Kommunikationseinheit (14) dazu eingerichtet ist, anhand der Profildaten (48) den Parameterwert in der zweiten Repräsentation zu bestimmen.

10. Kommunikationseinheit (14) für ein System (10) zum Bereitstellen eines Parameterwertes über eine datentechnische Verbindung; umfassend
eine erste Schnittstelle (141) zum datentechnischen Koppeln mit einem ersten Gerät (16);
eine zweite Schnittstelle (142) zum datentechnischen Koppeln mit einem zweiten Gerät (12); und
ein Steuermodul (143); wobei
das Steuermodul (143) dazu eingerichtet ist, mittels der ersten Schnittstelle (141) den Parameterwert in einer ersten Repräsentation zu empfangen, anhand des empfangenen Parameterwertes in der ersten Repräsentation den Parameterwert in einer zweiten Repräsentation zu bestimmen und den Parameterwert in der zweiten Repräsentation mittels der zweiten Schnittstelle (142) auszugeben.

11. Verfahren zum Bereitstellen eines Parameterwertes über eine datentechnische Verbindung; bei dem
der Parameterwert in einer ersten Repräsentation an eine Kommunikationseinheit (14) übertragen wird;
durch die Kommunikationseinheit (14) anhand des Parameterwertes in der ersten Repräsentation der Parameterwert in einer zweiten Repräsentation bestimmt wird; und
der Parameterwert in der zweiten Repräsentation ausgegeben wird.

12. Verfahren gemäß Anspruch 11,
**dadurch gekennzeichnet, dass**
in einem Initialisierungsschritt Initialisierungsdaten betreffend ein erstes Gerät (16) an die Kommunikationseinheit (14) übertragen werden; und
der Parameterwert in der zweiten Repräsentation ferner anhand der empfangenen Initialisierungsdaten bestimmt wird.
